# EUROPEAN PATENT APPLICATION

(11) **EP 1 696 592 A1**
(43) Date of publication of application: **30.08.2006**
(21) Application number: 04819397.3
(22) Date of filing: 25.11.2004
(51) Int. Cl.: H04H 1/00, H04N 5/38

(54) **CONTENT TRANSMITTER APPARATUS**

(30) Priority: 26.11.2003 JP 2003396295
(71) Applicant: MATSUSHITA ELECTRIC INDUSTRIAL CO., LTD., Kadoma-shi, Osaka 571-8501 (JP)
(72) Inventor: YAMAGUCHI, Koichiro, Osaka (JP); MORI, Toshiya, Osaka (JP); TANAKA, Akihiro, Osaka (JP); ARAI, Motohide, Osaka (JP); NAKAMURA, Kunitaka, Osaka (JP)
(74) Representative: Crawford, Andrew Birkby
(86) International application number: PCT/JP2004/017477
(87) International publication number: WO 2005/053192

(57) **Abstract**

A content transmission device receives broadcast data composed of a plurality of contents from another broadcasting station, converts the broadcast data to own-station broadcast data, and transmits the converted broadcast data. The content transmission device stores a plurality processing models, each having corresponding identity information, composition information indicating content scheduled for inclusion in the broadcast data, normal-case processing information, and irregular-case processing information. The content transmission device acquires identity information from an external device that manages the broadcasting schedule for the broadcast data, and selects the corresponding processing model. The content transmission device detects received broadcast data portions different from those indicated by the composition information in the selected processing model. Based on the result of the detection and the selected processing model, the content transmission device performs normal-case processing on non-differing portions of the scheduled composition and irregular-case processing on differing portions. Having thus processed the broadcast data, the content transmission device transmits the converted data as an own-station broadcast.

## Description

### Technical Field

The present invention relates to a content transmission device,in a broadcastingstationsystemfor digital broadcasting, which converts content distributed by another broadcasting station to a composition suitable to the broadcasting station to which the device belongs, and transmits the converted content.

### Background Art

Conventionally, television broadcast content transmission devices broadcast programs following control signals from an APS (Automatic Programming System), which provides transmission control for a plurality of programs. In terrestrial television broadcasting, a nationwide broadcast is achieved using network stations, each of which broadcasts programs originally distributed by a key station to its own receiving users.

In Patent document 1, a technology is disclosed for renewing the composition of text information in content to be broadcast from the various network stations, based on composition data from received from the APS. This technology also supports broadcast timetable changes.

Using this technology, it is possible to reduce the human involvement in the procedure for converting the composition data, automatically multiplex the broadcast program video and text information, and transmit the program.

Further, in Patent document 2, a technology is disclosed for preventing "flashes" of a key station CM being transmitted before being replaced with a network station CM, where such "flashes" result from time lags in the timing of CM replacement when a network station is transmitting a program distributed by the key station. In this technology, in order to synchronize the timing of the replacement, a network station stores an adjustment value for the cue signal cutover timing for each key station, and using this adjustment value, automatically carries out replacement processing on the programs from the various key stations.

With this technology, even if the key station from which the content is distributed should change, the replacement timing can be converted automatically, and the replacement processing carried out with the appropriate timing.

### Disclosure of the Invention

### The problem the invention sets out to solve

The technologies described above were conceived with analogue broadcasting in mind, and are based on the assumption that only one set of audio and video are to be dealt with. As a result, if in a given situation, a program could not be received or transmitted on schedule, appropriate action, such as the display of an on-screen message, was taken as the operator saw fit. However, with the advent of terrestrial digital broadcasting, which began late 2003, the composition of each set of content has become more complicated as each set of content may include a plurality of multiplexed programs, a data broadcast, and the like. Hence the technologies described above cannot be applied in digital broadcasting without conversion.

The present invention has an object of providing a content transmission device that, when irregularity is detected in a portion of the digital broadcast content received from another broadcast station, automatically takes appropriate action to deal with the normal and irregular content respectively, and retransmits the resulting content.

### The method used to solve the problem

The present invention is a content transmission device that receives and converts digital broadcast data containing a multiplexed plurality of contents, and transmits the converted data, the content transmission device including: a storing unit operable to store a plurality of processing models in correspondence with pieces of identity information, each processing model including composition information indicating a composition of the contents, normal- case conversion processing information for when the received broadcast data is normal, and irregular-case conversion processing information for when irregularity has been detected in the received broadcast data; an acquisition unit operable to acquire one piece of identity information from an external device that manages a transmission schedule for the broadcast data; a reception unit operable to receive the broadcast data; a selection unit operable to select the processing model corresponding to the acquired piece of identity information; a detection unit operable to detect a received broadcast data portion whose composition differs from the composition information in the selected processing model; a conversion unit operable to carry out, based on a detection result and the selected processing model, normal-case conversion processing on a portion of the received broadcast data whose composition matches the composition information, and irregular-case processing on the portion of the received data whose composition differs from the composition information; and a transmission unit operable to transmit the converted data.

### The effect of the invention

The present invention is a content transmission device of the construction described above.

With this construction, the content transmission device receives broadcast data from another device, converts the received broadcast data according to a processing model, and transmits the converted broadcast data. Hence, by storing various processing models in advance, the content transmission device can carry out the appropriate conversions on irregular and normal portions of broadcast data respectively without intervention from the operator, even if the received content data has a complex structure.

Here, the normal-case conversion processing may be processing for replacing, with a different content, at least one of the plurality of contents indicated in the composition information, and the irregular-case conversion processing may be processing for replacing, with another content, a content
in which irregularity has been detected based on the composition information.

With this construction, it is possible to transmit normal portions of the content without conversion, but transmit those portions of the content detected to be irregular only after replacing them with other content.

Here, a storing unit may further store an irregular-case processing model that is not in correspondence with a piece of identity information, the irregular-case processing model may indicate a composition of the contents that are included in data to be transmitted, the detection unit may further judge whether or not the proportion of contents different from the composition information is greater than a reference level, the conversion unit may replace, when the reference level is judged to have been exceeded, the received broadcast data with replacement broadcast data indicated by the irregular-case processing model, and the transmission unit may transmit the replacement broadcast data.

With this construction, since a separate processing model is selected when the proportion of contents that are irregular is greater than a reference level, it is possible to carry out processing appropriate to the irregular state of the broadcast data.

Here, the reception unit may receives broadcast data continuously, and when the detection unit detects that the proportion of the contents different from the composition information is less then the reference level, the conversion unit may suppress the conversion of broadcast data indicated bytheirregular-caseprocessingmodel, and convert the broadcast data based on the selected processing model.

With this construction, when then received broadcast data reverts to a normal state, the content broadcast device reverts to the processing model that was originally selected. Hence, as long as irregularities do not reappear, it is possible to transmit the content as scheduled in transmission schedule.

Here, the detection unit may detect irregularity if (i) a content differing from the contents indicated in the composition information is received, or (ii) a portion of contents included in the contents indicated by the composition information is not received.

With this construction, portions of the contents that vary from the transmission schedule are detected as being irregular, and hence, it is possible to prevent the transmission of these portions.

Here, the pieces of identity information are triggers generated by an APS (Automatic Programming System).

With this construction the processing model to be applied is chosen according to the signal from the APS, and hence, it is possible to process the content without holding up the reception and transmission of the content.

### Brief Description of the Drawings

FIG. 1 is a block diagram showing the construction of a content transmission device 100;
FIG. 2 shows the structure of data in content processing models 200;
FIG. 3 is a flow chart showing the operation of the content transmission device 100;
FIG. 4 is an example of content distributed from a generating station;
FIG. 5 is an example of content that is retransmitted by a home station; and
FIG. 6 is an example of content that is transmitted when an irregularity has been detected in the TS.

### Description of the symbols

- 100: Content transmission device
- 101: Content processing model input unit
- 102: Content processing model control unit
- 103: Trigger reception unit
- 104: Input testing unit
- 105: Input/output processing unit
- 106: Replacement processing unit
- 107: Transmission processing unit
- 200: Content processing models
- 210: Trigger
- 230: Irregular-case processing model

- 240: ES
- 250: Module replacement
- 300: Automatic Programming System transmission device
- 400: Monitor

### Best Mode for Carrying Out the Invention

The content transmission device 100 of the present invention is used by a broadcast station in terrestrial digital broadcasting to automatically retransmit content distributed by a generating station to users who receive content from the broadcast station.

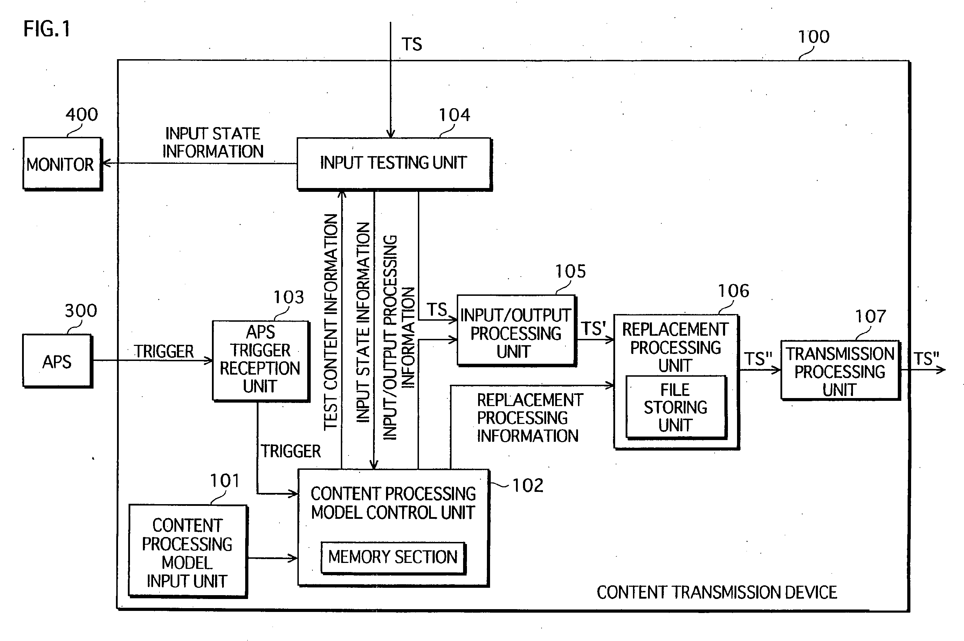

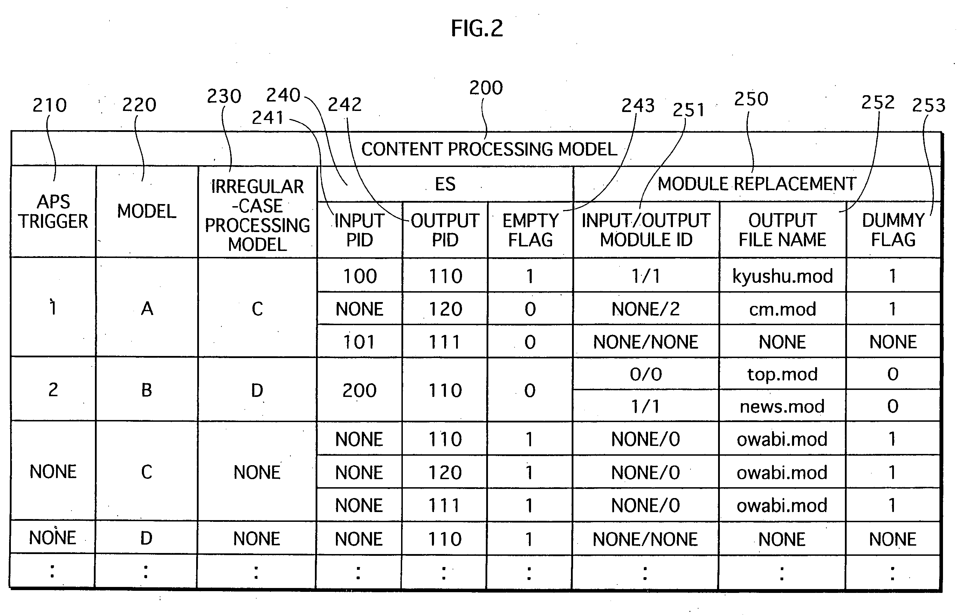

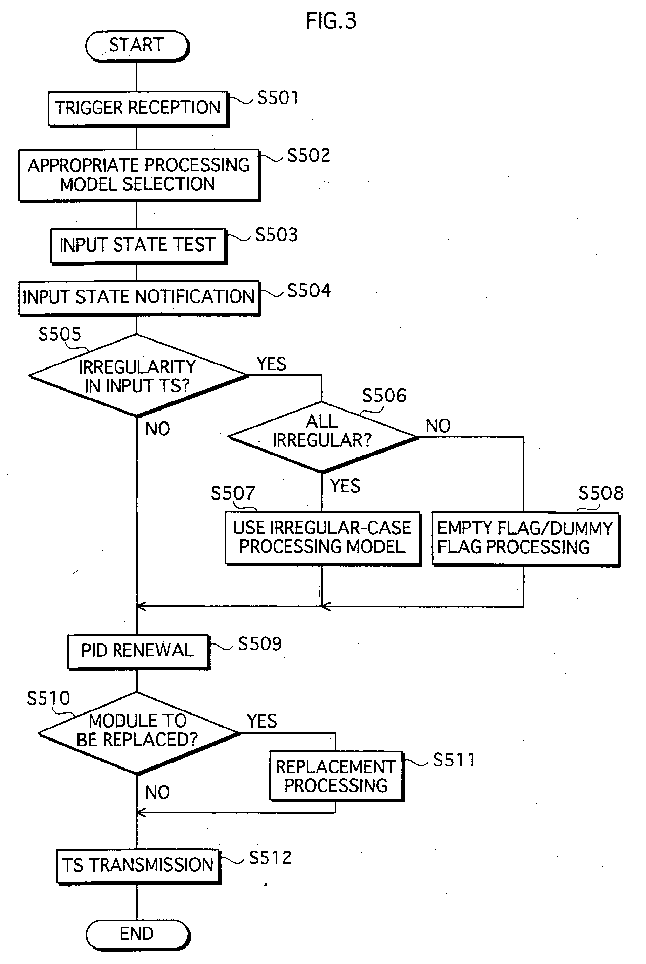

In order to broadcast content appropriate to the users, when retransmitting a TS (Transport Stream) received from the generating station, the content transmission device 100 carries out processing such as PID replacement, module replacement, and the like, converting the TS. Here, the TS received from the generating station is an MPEG-2 transport stream.
1. Here, the structure of the content transmission device 100 is described.
   As shown in FIG. 1, the content transmission device 100 is constructed from a content processing model input unit 101, a content processing model control unit 102, an APS trigger reception unit 103, an input testing unit 104, an input/output processing unit 105, a replacement processing unit 106, and a transmission processing unit 107.
   The content transmission device 100 is, in practice, a computer systemmade up from components such as a microprocessor, ROM, RAM, a hard disc unit, and a display. Computer programs are stored on the hard disk or in the RAM, and the content transmission device 100 realizes its functions by the microprocessor operating according to the computer programs.
   Further, a monitor 400 is connected to the input testing unit 104, and the APS trigger reception unit 103 is connected to an automatic television program transmission device 300 (hereafter referred to as the APS: Automatic Program System).
   The APS 300 is a device that manages a content transmission schedule including a list of content, starting times, finishing times and the like, and controls the sequence of transmission for the audio and video data of the plurality of scheduled content. The APS 300 outputs pieces of information relating to starting times, finishing times and composition conversion of the program as triggers. However, since the APS is widely known, a detailed description is omitted here.
   The various units making up the content distribution device are described below.
   (APS trigger reception unit 103)
   The APS trigger reception unit 103 receives triggers composed of data containing different types of signals respectively denoting the start, finish and composition conversion of the programs, and outputs APS triggers to the content processing model control unit 102.
   Note that the APS trigger reception unit 103 may output, as APS triggers, the received start, finish and composition conversion signals as they are, or first analyze the received signals, and output the results of the analyses.
   (Content processing model input unit 101)
   The content processing model input unit 101 inputs content processing models 200 of FIG. 2 to the content processing model control unit 102. Note that the content processing models 200 form a prescribed table of models for converting the TS. These content processing models 200 are described later.
   Further, the content processing models 200 may be inputted by an operator by hand, be received from another device, or be stored in advance in the content processing model control unit 102.
   (Content processing model control unit 102)
   The content processing model control unit 102 includes a memory section, stores the content processing models 200 inputted by the content processing model input unit 101, receives triggers from the APS reception unit 103, and depending on the type of trigger, selects an appropriate processing model from the content processing models 200.
   The content processing model control unit 102 notifies the input testing unit 104 of PID numbers scheduled for inclusion in the coming TS, taking these PID numbers from the selected model and outputting them as test content information.
   The content processing model control unit 102 receives, as input state information from the input testing unit 104, a judgment indicating whether or not the received TS is irregular. When the received input state information indicates the TS to be normal, the content processing model control unit 102 determines the replacement PIDs and replacement modules according to the selected processing model, outputs input/output processing content that instructs replacement of the PIDs to the input/output processing unit 105, and outputs replacement processing content that instructs module replacement to the replacement processing unit 106.
   When the received input state information indicates that the TS is irregular, the content processing model control unit 102 follows an irregular-case model that is prescribed by processing model, and according to this irregular-case model, outputs instructions to various other units.
   (Input testing unit 104)
   The input testing unit 104 receives the TS which is being distributed from the generating station. Note here that the TS may be distributed from the generating station over an exclusive line or via a network such as the Internet, or using radio waves.
   Further, the input testing unit 104 receives the test content information from the content processing model control unit 102.
   The input testing unit 104 judges whether or not the TS being received is irregular in state.
   Here, the TS is deemed to be in an "irregular state", if in a predetermined time period, specified packets do not arrive, packet CRCs are broken, PIDs differ from the PID numbers specified in the inputted test content information, data for a module arrives before the preceding module can be assembled, or other such problems occur.
   The input testing unit 104 outputs its judgment as the input state information to the content processing model control unit 102, and in order to notify the operator, further displays the judgment on the monitor 400.
   (Input/output processing unit 105)
   The input/output processing unit 105 receives the TS originally distributed by the generating station, from the input testing unit 104, and replaces the PIDs included in the received TS with replacement PIDs in accordance with the input/output processing content information received from the content processing model control unit 102. The input/output processing unit 105 outputs a TS', which includes the replacement PIDs, to the replacement processing unit 106.
   (Replacement processing unit 106)
   The replacement processing unit 106 contains a file storing unit. The replacement processing unit 106 receives the TS' from the input/output processing unit 105 and the replacement processing content information from the content processing model control unit 102. In accordance with the received replacement processing content information, the replacement processing unit 106 replaces the modules of TS' with modules whose content is read off from files stored in the file storing unit, and outputs TS'', which is the TS' with its modules replaced, to the transmission processing unit 107.
   (Transmission processing unit 107)
   The transmission processing unit 107 performs processing for the transmission of TS'', the converted version of TS'.
   Here, the content processing models 200 are described.
   The content processing models 200, as shown in FIG. 2, is composed of sets of APS triggers 210, models 220, irregular-case reprocessing models 230, ESs 240 and module replacements 250. The sets are classified by the models 220.
   The content processing models 200 are the models used for each type of trigger in the processing that takes place when the content transmission device 100 receives the TS from the generating station, converts the content, and retransmits the content.
   (APS trigger 210)
   Each APS trigger 210 is a type of trigger transmitted from the APS 300. The processing models to be applied in subsequent processing are classified according to this type. For example, on reception of a trigger 1 from the trigger reception unit 103, the content processing model control unit 102 selects the row indicated by "1" in the APS triggers 210 as the processing model to be applied.
   The row marked "none" indicates a situation where the corresponding model is not selected using a specific trigger.
   Note also that a processing model for when the trigger itself is irregular may be set.
   (ES 240)
   The ES 240 section contains input PIDs 241, output PIDs 242, and empty flags 243.
   The input PIDs 241 are the PID numbers that are scheduled to be included in the TS when the TS is normally received from the generating station. The output PIDs 242 are the PID numbers used to replace the input PIDs when the received TS is retransmitted. The row where the input PID is "none" indicates that there is no input data, and that, before broadcasting, the content transmission device 100 will add a content with the PID number. In other words, in the case of model A, the received content PID "100" and PID "101" are replaced with output PID "110" and PID "111" respectively, and a content with PID "120" is added.
   The empty flags 243 are indicators of the processing that takes place when the input testing unit 104 has judged that a portion of the received ES (Elementary Stream) is irregular. A processing model empty flag 243 being "1" indicates that an empty carousel is to be outputted instead of the ES in which irregularity has been detected. Here, the empty carrousel refers to a transmission method using a data broadcast which is empty of content, and is defined by the ARIB (Association of Radio Industries and Businesses) standard. When the empty flag 243 is "0", the processing continues as if the TS is normal. In other words, even if the inputted packets are broken, they are outputted as they are, and if there is no input, nothing is output. Note here that other content may be transmitted instead of the empty carousel.
   (Module Replacement 250)
   Each module replacement 250 contains an input/output module ID 251,an output file name 252, and a dummy flag 253.
   The input and output module IDs 251 are, respectively, the input module IDs scheduled to be included in the TS, and replacement output module IDs which replace the input module IDs when the TS is retransmitted if the TS has been normally received from the generating station. If the input ID and the output ID are "none", this indicates that the module is not to be replaced. Further, if the input module ID is "none" and the output module ID has a number, this indicates that a module is to be added.
   The output file name 252 is the names of a file in which modules for replacing the received modules are stored. The files indicated by the output file names 252 are stored in the file storing unit.
   The dummy flag 253 prescribes the processing for the input modules when the input testing unit 104 has judged that there is an irregularity in a portion of an input module. If the dummy flag 253 is "1" a module prepared in advance for when an irregularity occurs is output instead of the module designated by the processing model. If the dummy flag is "0" the designated module is transmitted as it is, even if there is an irregularity in the inputted module.
   Note also, this replacement processing may be used to deal with resources rather than modules, in which case the content processingmodels 200 designate resource names rather than module IDs.
   (Irregular-case reprocessing model 230)
   The irregular-case reprocessing model 230 is the processing model applied when the input testing unit 104 has detected irregularity in all of the ESs. When the received input state information indicates irregularity, the content processing model control unit 102 selects the row indicated by the irregular-case reprocessing model 230 from the applied processing model as a new processing model, and carries out replacement processing on the modules and the PIDs according to this reselected processing model. Note that an irregular-case processing model need not be provided, and where it is not, processing is carried out according to the processing model originally selected for application, even when irregularity has been detected in the TS'.
2. Here, the operation of the content transmission device 100 is described with reference to FIG. 3.
   The APS trigger receiving unit 103 receives a trigger from the APS 300, and outputs the received trigger to the content processing model control unit 102 (Step S501). The content processing model control unit 102 selects the processing model for application using the received trigger (Step S502), and outputs the PID numbers that are scheduled to be received as the test content information to the input testing unit 104.
   The input testing unit 104 judges whether or not there is an irregularity in the TS distributed by the generating station, outputs the result of the judgment to the content processing model control unit 102 as the input state information, and displays the result on the monitor (Step S504).
   When the input state information indicates the received TS is normal(NO in step S505), the content processing model control unit 102, acting according to the selected processing model, outputs input/output processing content that instructs replacement of the PIDs to the input/output processing unit 105, and outputs replacement processing content that instructs replacement of the module to the replacement processing unit 106.
   When, on the other hand, the input state information indicates that one or more of the ESs is irregular (YES in Step S505), the content processing model control unit 102 judges whether or not all of the received ESs have irregularities (Step S506), and if they have, selects the irregular-case reprocessing model as the processing model to be applied (Step S508). If, on the other hand, only a part of the ESs is irregular, the content processing model control unit 102 refers to the empty flag and the dummy flag of the processing model(Step S507). If the empty flag of an ES in which an irregularity has been detected is "1", the content processing model control unit 102 outputs, to the input/output processing unit 105, input/output processing content that instructs transmission an empty carousel instead of that ES. Further, if the dummy flag of an input module in which an irregularity has been detected is "1", the content processing model control unit 102 outputs, to replacement processing unit 106, replacement processing content that instructs replacement of the received module with a module for irregular-case use.
   Next, the input/output processing unit 105 replaces the PIDs in accordance with the input/output processing content (Step S509).
   When the replacement processing content received from the content processing model control unit 102 contains instructions to replace a module (Step S508), the replacement processing unit 106 replaces the module in accordance with the replacement processing content (Step S509).
   The transmission processing unit 107 transmits the TS'', which is the TS after being converted in the way described above.
   Hence, it is possible to appropriately convert and automatically retransmit the TS received from the generating station.
3. As a practical example of the processing that is carried out, the case where a trigger 1 is received is described below.
   (a)Firstly, in the case that no irregularity has been detected in the received TS, the processing proceeds as follows.
      (1) When, in step S502, the received trigger is "1", the content processing model control unit 102 selects the row in which the trigger is "1" from the content processing models 200, thereby selecting model A as the applied processing model.
         From the input PIDs of processing model A, the content processing model control unit 102 notes that in the distributed TS, the PID combination will be "100" and "101" , and hence, outputs test content information indicating that the PID combination will be "100" and "101" to the input testing unit 104.
      (2) In Step 5503, the input testing unit 104 receives the TS distributed from the generating station. The input testing unit 104 makes judgments about the input state of the TS, deciding, for instance, whether or not the PIDs included in the received TS are "100" and "101", and whether or not there are irregularities in the received ES and modules. In Step S504, the input testing unit 104 outputs the results of these judgments as the input state information to the content processing model control unit 102, and further displays the results on the monitor 400 in order to notify the operator.
      (3) In Step 505, when the input state information indicates normality, the content processing model control unit 102 subsequently carries out processing in accordance with model A.
         Firstly, the content processing model control unit 102 outputs, to the input/output processing unit 105, the input/output processing content that instructs replacement of PID "100" and PID "101" of the received TS with "110" and "111" respectively, and addition "120" to the TS. Further, the content processing model control unit 102 outputs replacement processing content that instructs replacement of the module having module ID "0001" and addition the module having module ID "0002" to the replacement processing unit 106.
      (4) In Step S509, the input/output processing unit 105 replaces PID "100" of the distributed TS with "110" and PID "101" with "111" respectively, and adds PID "120", thereby generating the TS'. The input/output processing unit 105 outputs the TS' to the replacement processing unit 106.
      (5) In Step S510, the replacement processing unit 106 retrieves a file named "kyushu.mod" from the file storing unit, and uses it to replace the module with module ID "0001". Further, the replacement processing unit 106 retrieves a file named "cm.mod" from the file storing unit, and adds it to the TS' as a module with module ID "0002". Note that the module indicated by PID "111" is not replaced.
         The replacement processing unit 106 outputs TS'', which it has generated in the way described above, to the transmission processing unit 107.
      (6) In Step S512, the transmission processing unit 107 transmits TS" as the content of the home station.
         (b) Secondly, in the case that an irregularity has been detected in one portion of the TS, the processing proceeds as follows.

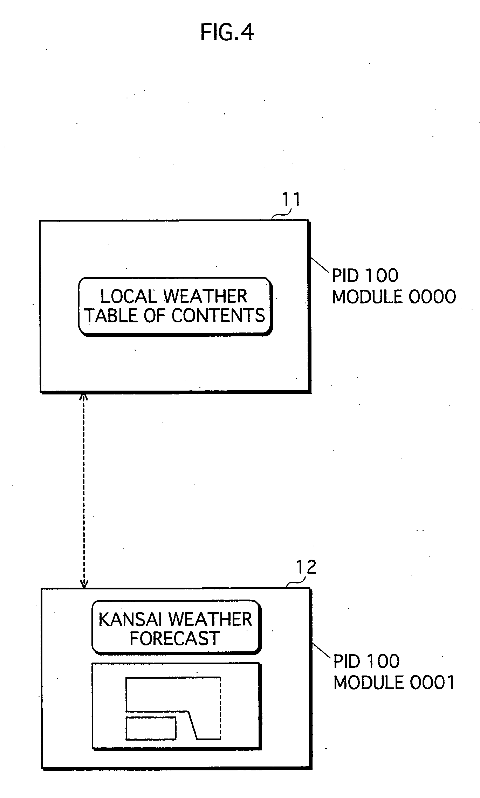

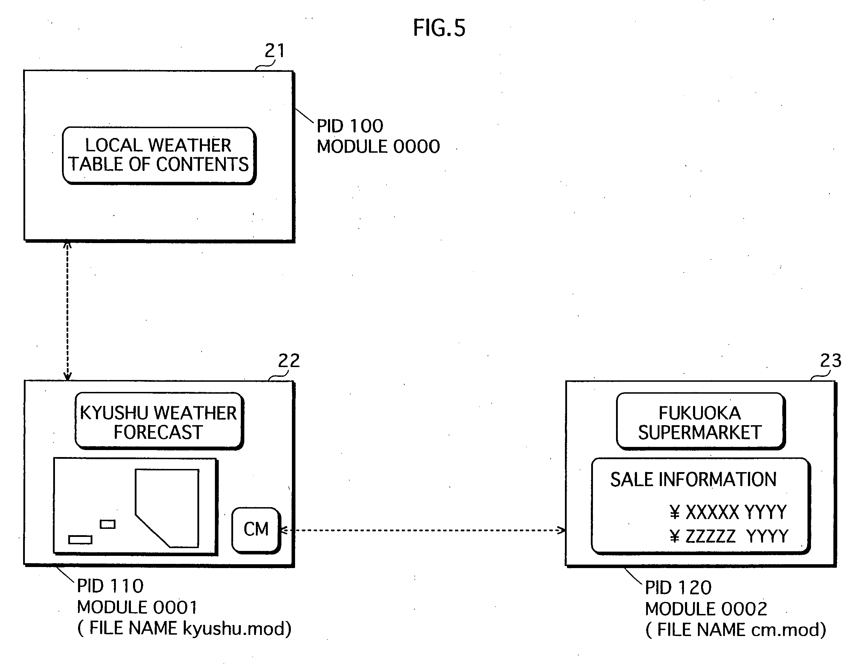

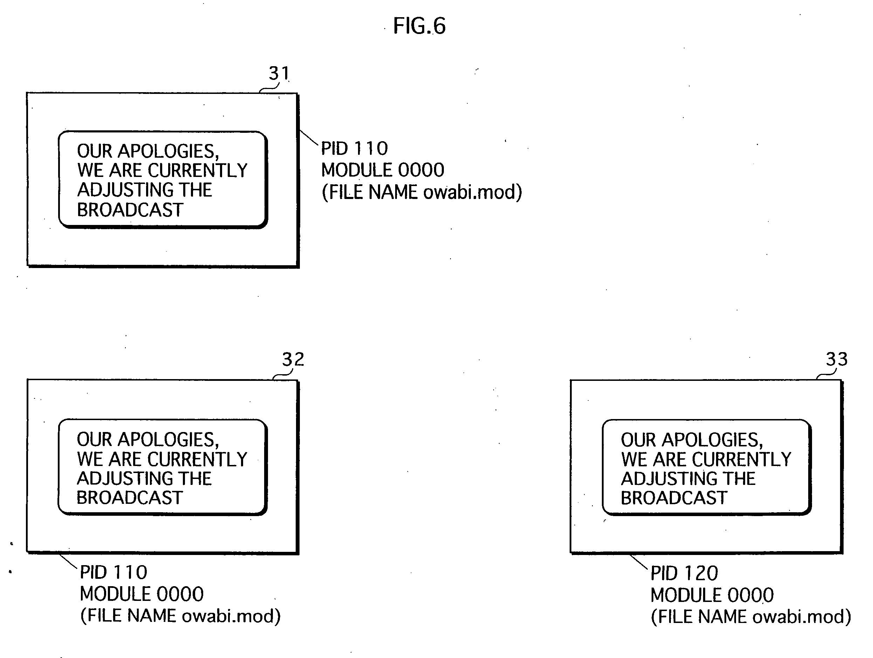

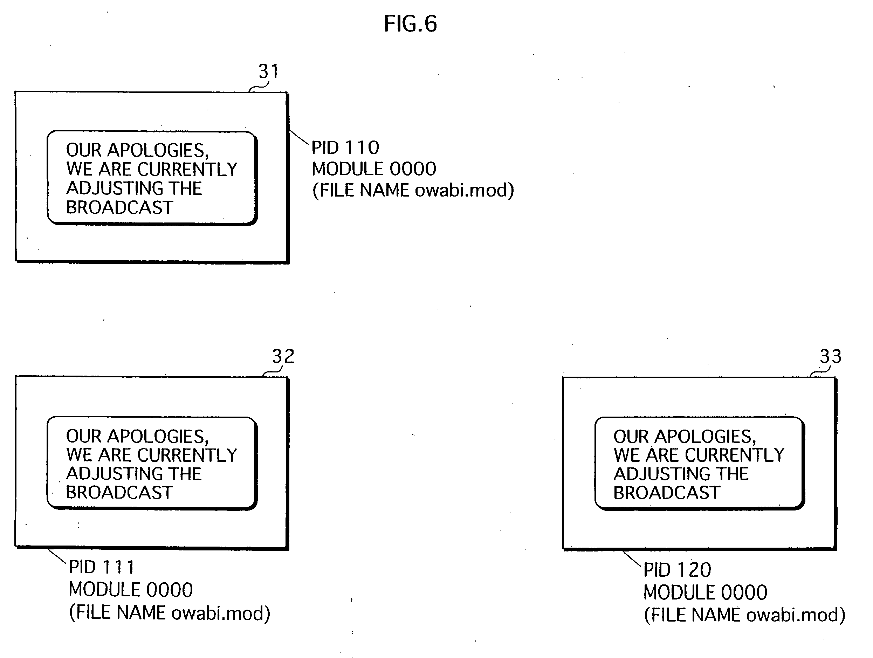

      Note that processing identical to (1), (2) and (6) described above is carried out.
   (3') In Step S506, when the received input state information received by the content processing model control unit 102 indicates that an irregularity has been detected in the ES with the input PID "100", the empty flag is "1", and so the content processing model control unit 102 outputs input/output processing content that instructs the transmission of an empty carousel instead of the ES that has the irregularity, to the input/output processing unit 105.
      When the input state information indicates that an irregularity has been detected in the input ES with the input PID "101", the empty flag is "0", and so the content processing model control unit 102 outputs input/output processing content that instructs the transmission of the received ES without conversion.
      When the input state information indicates that an irregularity has been detected in the input ES corresponding to the output PID "120" , the empty flag is "0", and so the content processing model control unit 102 outputs input/output processing content instructing that nothing is to be transmitted.
      Further, when the input state information indicates that an irregularity has been detected in the modules corresponding to module ID "0001" and module ID "0002", the dummy flag is "1", and so the content processing model control unit 102 outputs replacement processing content that instructs replacement of the received module with the irregular-case module, to the replacement processing unit 106.
      When the input state information indicates that an irregularity has been detected in the module with the output PID "111" , the dummy flag is "0", and so the content processing model control unit 102 outputs replacement processing content that instructs the transmission of the received module as it is, to the replacement processing unit 106.
   (4') In Step S509, in accordance with the input/output processing content, when an irregularity has been detected in the ES with the input PID "100", the input/output processing unit 105 transmits an empty carousel. Further, when an irregularity has been detected in the ES with one of the output PIDs "120" and "111", the input/output processing unit 105 transmits the received ES as it is. A normal ES is processed in the same way as in (4), which is described above.
   (5') In Step S511, in accordance with the replacement processing content, when an irregularity has been detected in output modules with IDs "0001" or "0002", the replacement processing unit 106 replaces the received module with an irregular-case module, but when an irregularity has been discovered in a module for which there is no replacement, transmits the received model as it. A normal module is processed in the same way as (5), which is described above.
      (c) Thirdly, in the case that irregularity has been detected in all of the received ES, the processing proceeds as follows.
         Note that processing identical to that of (1), (2) and (6) described above is carried out.
   (3'') In Step S506, when the input state information indicates that irregularity has been detected in all of the ES, the content processing model control unit 102 refers to the irregular-case reprocessing model, and selects processing model C. The content processing model control unit 102 outputs, to the input/output processing unit 105, input/output processing content that instructs the transmission of the ES with the numbers indicated by the output PIDs in the selected model attached, whatever the input PIDs might have been. Further, the content processing model control unit 102 outputs replacement processing content that instructs the transmission, with a module ID "0000" , of the module of the file indicated by the output file name, to the replacement processing unit 106.
   (4'') The input/output processing unit 105 attaches "110", "120" and "111" as output PIDs.
   (5'') The replacement processing unit 106 reads off the file "owabi.mod" from the file storing unit, sets the module ID to "0000" and outputs TS" to the transmission processing unit 107.
4. The make up of the converted content is described below with reference to FIG. 4, FIG. 5, and FIG. 6. Note that, in FIG. 4 to FIG. 6, in order to simplify matters, the content appears in the state in which it is displayed when viewed on-screen.
   In the case of trigger 1, the pieces of content with PIDs "100" and "101" are received. Content portions 11 and 12, with PID "100", are shown in FIG. 4.
   In the case of trigger 1, the content portion distributed from the generating station has one of PID "100" and PID "101" attached.
   FIG. 4 shows the content portions 11 and 12 with PID "100". Content portion 11 has the PID "100" and module ID "0000", and content portion 12 has the PID "100" and the module ID "0001". The content portion 11 is displayed first. Thereafter, content portion 12 is displayed, according to user operations on a remote control.
   When the received TS is normal, the content transmission device 100 applies model A, and replaces the PIDs and the modules. The content of FIG. 4 has a PID of "100", and is therefore replaced with "110", as in FIG. 5. Further, the content transmission device 100 replaces, as model A prescribes, the content portion 12, which has the module ID "0001", with the module having the file name "kyushu.mod". Hence, the content portion 12 shown in FIG. 4 changes to portion 22 shown in FIG. 5. Moreover, the content transmission device 100, in accordance with model A, adds the module ID "0002", which corresponds to PID "120" and identifies the content portion 23 shown in FIG. 5. After conversion content portion 21 is displayed first, and content portions 22 and 23 are displayed according to operations on the remote control. Note that PID "101", which is not shown in the drawings, is replaced with PID "111", and that replacement of the module does not take place. In this way, the content transmission device 100 transmits the TS'', which is a converted version of the TS.
   Note that when an irregularity has been detected in a packet with the PID "100", the empty flag is "1", so the content transmission device 100 transmits an empty carousel. Further, when an irregularity is detected in packets with the PIDs "111" and "120", the content transmission device transmits the packets as they are, without performing any further processing.
   Further, when irregularities are detected in all of the received ES, the content transmission device 100 applies model C, the irregular-case processing model corresponding to model A. Hence, when irregularities are detected in all of ES, the content transmission device 100, in accordance with processing model C and whatever the inputted content may be, reads off the file with the file name "owabi. mod" and transmits content portion 31, which is the read-off file with PID 110 and module ID "0000" attached, content portion 32, which is the read-off file with PID 111 and module ID "0000" attached, and content portion 33, which is the read-off file with PID 120 and module ID "0000" attached, as the TS''.
5. The processing in the case of irregularity is described below.
   Note that "irregular" is used to mean either that the content transmission device 100 has detected data different from the predetermined content, or that the predetermined content has not been inputted. The predetermined content may be determined by the user, or be standardized data such as a standard MPEG-2 transport stream.
   The input testing unit 104 stores a predetermined period, which is the reference time frame for irregularity detection, receives test content information from the content processing model control unit 102 , and judges whether or not the PIDs attached to the packets match those in the test content information.
   When the PIDs different from those indicated in the test content information are inputted, when the PIDs indicated in the test content information are not inputted, or when the PIDs indicated in the test content information are not inputted within the predetermined period, the input testing unit 104 judges the TS to be irregular.
   When the received PIDs are those indicated in the test content information, the input testing unit 104 judges whether or not the CRC values of the received packets are correct, and if not, judges the TS to be irregular.
   Further, the input testing unit 104 judges whether or not there is irregularity in the received modules, judging whether or not the set of DDBs (Download Data Block) that make up the module are complete, whether or not the module length recorded in the module matches the length of the module that is actually received, and whether or not a resource list recorded in the module matches the resource names that are received.
   When the module DDBs are not complete, the recorded length and received length do not match, or the resources names do not match those of the resource list, a module is judged to be irregular.
   Further, when a module is not received within the predetermined period, the input testing unit judges the module to be irregular.
   When irregularity has been detected in any of the ways described above, the input testing unit 104 outputs irregularity information to the content processing model control unit 102 as the input state information, and notifies the operator by displaying the irregularity information on the monitor 400.
   On receiving the input state information, the content processing model control unit 102 carries out processing appropriate to the irregularity information.
   Firstly, when a PID different from the ones specified is detected, input/output processing content is output to the input/output processing unit 105 to the effect that the packet in question is to be deleted. When the PIDs are not inputted in the predetermined period, when the packet CRCs are irregular, or when an irregularity has been detected in a received module, the contentprocessingmodel control unit 102 outputs replacement processing content to the effect that the module in question should be replaced, to the replacement processing unit 106.
   Note that the APS trigger reception unit 103 may be used to detect irregularity in the trigger. If this is the case, the APS trigger reception unit 103 stores a time frame, and when a trigger is not received within the time frame, informs the content processing model control unit 102 that the trigger is irregular. Further, when the received trigger is a code different from the ones provided in the content processing models, the APS trigger reception unit 103 outputs that the trigger is irregular, to the content processing model control unit 102.
   On receiving notification to the effect that irregularity has been detected from the APS trigger reception unit 103, the content processing model control unit 102 instructs the input/output control unit 105 and the replacement processing unit 106 to replace the usual broadcast with the irregular-case module.
   Note that the irregular case module may be an apology message module, as shown in FIG. 6, or other content.
   For example, when an irregularity has been detected in the content portion 11 of FIG. 4, the content portion 31 of FIG. 6 is used to replace it.
6. Modifications
   Note that, although the present invention has been described based on the above embodiment, the present invention is certainly not limited to this embodiment. The following cases are also included in the present invention.
   (1) In the embodiment, when irregularity has been detected in all of the ESs, the irregular-case reprocessing model is applied, and when irregularity has been detected in part of an ES or in a module, the content transmission device carries out processing with reference to the empty flag or dummy flag. However, the irregular-case reprocessing model may instead be applied when irregularity has been detected in a predetermined ES or module.
      Further, the content processing models 200 may be of a structure that does not include an irregular-case reprocessing model. If this is the case, even if irregularity is detected in all of the ESs, the various ESs and modules are each processed separately in the same way as in the embodiment.
      Further, content processing model may be of a construction in which the empty flag and dummy flag are not specified. If this is the case, the irregular-case reprocessing model is applied even when irregularity is only detected in one portion of the ES or module.
   (2) The content transmission device 100 need not include the content processing model input unit 101. The content processing model may be inputted by the operator, inputted from an external device, or stored in advance in the content processing model control unit 102.
   (3) The input/output processing unit 105 may be provided such that the operator and the content processing model control unit 102 are only converted when irregularity is detected in the received TS.
      Further, means other than displaying results on monitor may be used to notify the operator. These means may include using sound, illuminating a lamp and sending an e-mail.
   (4) When there is no need to replace any of the modules of the received TS, the content transmission device 100 may be of a construction that does not include replacement processing unit 106.
   (5) In the embodiment, when there was an irregularity in a module, a prearranged module was transmitted in its place. This replacement module may instead be set to specify an output file each time an irregularity is detected.
   (6) On reception of the trigger, the content processing model control unit 102 immediately applies a processing model and starts processing. However, the content processing model control unit 102 may instead wait a predetermined period before applying the processing model.
   (7) In the embodiment the TS was a MPEG-2 transport stream, but the present invention is not limited to a transport stream of that form. An IP (Internet Protocol) stream may be distributed instead. Further, the data need not be distributed in stream form at all. A data carousel or a module in file format may be used instead.
      If a file form is used, the content processing models 200 may include input modules instead of input PIDs, and specify a plurality of input modules for one output PID. Note that the input modules may be further made up of a plurality of input files. Further, the transmission of content using the content transmission device 100 is not limited to broadcasting stations. Other distributors, producers and the like may also use the content transmission device 100 to transmit content.
   (8) In the description of the content processing models 200 of the embodiment, the processing for replacing the PIDs and the modules has been described. However, the content processing models 200 may include other processing such as multiplexing and the attachment of an information header.
   (9) After applying the irregular-case processing the content transmission device 100 may monitor the condition of the TS, and if the TS reverts to a normal state, return to the processing for a TS in the normal state. In such a case, when carrying out processing designated by the empty flag or the dummy flag and the TS reverts to a normal state, the content transmission device 100 carries out the processing specified by the input PID 241 and the output PID 242, or alternatively, by the input/output module ID 251 and the output file name 252, of the processing model that is being applied. If the irregular-case reprocessing model has been applied, the content transmission device 100 reverts to the normal-case processing model specified by the trigger. When reverting to a normal-case processing model, the content transmission device 100 may re-specify the processing model, or store the model designated by the trigger and apply the stored processing model when it judges that the TS has returned to normal. Note also that monitoring of the state of the TS may be carried out continuously, or judge whether or not the TS is irregular at regular intervals. Alternatively, this judgment may be made based the timing of other processes, such as the timing of the input and output of the TS.
   (10) The present invention may be the methods indicated above. Further, these methods may be a computer program executed by a computer or further be the digital code of the computer program.
      Further, the present invention may be the above-mentioned computer program and the digital code recorded onto a recording medium that can be read by a computer. Examples of such recording media include, flexible disk, hard disk, CD-ROM, MO, DVD, DVD-ROM, DVD-RAM, BD (Blu-ray Disc), semiconductor memory and the like.
      Further, the present invention may be realized such that the computer program or the digital code are transmitted across telecommunications networks, wired or wireless, such as the Internet and the like.
      Further, the present invention may be a computer system having a microprocessor and a memory, the memory holding the above-mentioned computer program and the microprocessor performing operations according to the computer program.
      Further, the computer program or the digital code may be installed on an independent computer system by either recording the digital code one of the recording medium and transferring the recording medium, or by transferring the computer program and digital code via one of the networks.
   (11) The present invention may be any combination of the embodiment and the modifications.

### Industrial Applicability

The present invention can be applied, in the field of terrestrial wave digital broadcasting to a device that retransmits, to content-receiving users of it own broadcast station, a TS distributed by a different broadcast station. In particular, the present invention is suitable for a program broadcasting device used by network stations that transmit content originally distributed by a key station, when implementing nation-wide broadcasting.

## Claims

1. A content transmission device that receives and converts digital broadcast data containing a multiplexed plurality of contents, and transmits the converted data, the content transmission device comprising:
a storing unit operable to store a plurality of processing models in correspondence with pieces of identity information, each processing model including composition information indicating a composition of the contents, normal-case conversion processing information for when the received broadcast data is normal, and irregular-case conversion processing information for when irregularity has been detected in the received broadcast data;
an acquisition unit operable to acquire one piece of identity information from an external device that manages a transmission schedule for the broadcast data;
a reception unit operable to receive the broadcast data;
a selection unit operable to select the processing model corresponding to the acquired piece of identity information;
a detection unit operable to detect a received broadcast data portion whose composition differs from the composition information in the selected processing model;
a conversion unit operable to carry out, based on a detection result and the selected processing model, normal-case conversion processing on a portion of the received broadcast data whose composition matches the composition information, and irregular-case processing on the portion of the received data whose composition differs from the composition information; and
a transmission unit operable to transmit the converted data.

2. The content transmission device of Claim 1,
wherein the normal-case conversion processing is processing for replacing, with a different content, at least one of the plurality of contents indicated in the composition information, and
the irregular-case conversion processing is processing for replacing, with another content, a content in which irregularity has been detected based on the composition information.

3. The content transmission device of Claim 1,
wherein the storing unit further stores an irregular-case processing model that is not in correspondence with a piece of identity information,
the irregular-case processing model indicates a composition of the contents that are included in data to be transmitted,
the detection unit further judges whether or not the proportion of contents different from the composition information is greater than a reference level,
the conversion unit replaces, when the reference level is judged to have been exceeded, the received broadcast data with replacement broadcast data indicated by the irregular-case processing model, and
the transmission unit transmits the replacement broadcast data.

4. The content transmission device of Claim 3,
wherein the reception unit receives broadcast data continuously, and
when the detection unit detects that the proportion of the contents different from the composition information is less then the reference level, the conversion unit suppresses the conversion of broadcast data indicated by the irregular-case processing model, and converts the broadcast data based on the selected processing model.

5. The content transmission device of Claim 1,
wherein the detection unit detects irregularity if (i) a content differing from the contents indicated in the composition information is received, or (ii) a portion of contents included in the contents indicated by the composition information is not received.

6. The content transmission device of Claim 1,
wherein the pieces of identity information are triggers generated by an APS (Automatic Programming System).

7. The content transmission device of Claim 1, further comprising:
an output unit operable to notify an operator of the content transmission device of the detection result from the detection unit.

8. The content transmission device of claim 1,
wherein the broadcast data is received in packet form,
a packet ID is attached to each packet,
the composition information contains the packet IDs scheduled for reception, and
the detection unit detects when the packet ID of any received packet differs from the packet IDs in the composition information.

9. The content transmission device of Claim 8,
wherein each packet includes a CRC value,
the detection unit further judges whether or not the CRC value of each packet is correct, and judges a packet to be irregular when the CRC value is judged to be incorrect, and
the conversion unit carries out irregular conversion processing on the one or more packets that are irregular.

10. The content transmission device of Claim 9,
wherein each packet has a respective packet ID attached,
the composition information contains the packet IDs that are attached to packets scheduled to be received, and
the detection unit detects, among the packet IDs of the received packets, any packet IDs that differ from the packet IDs in the composition information, and judges any packets having the differing packet IDs to be irregular.

11. The content transmission device of Claim 1,
wherein the contents are made up of a plurality of modules,
the irregular-case conversion processing is replacement, with another module, of a module in which irregularity has been detected, and
the detection unit judges whether or not any portion of the received modules fails to meet a judgment requirement indicating a normal module, and when an irregular portion is present in a module, judges the module to be irregular.

12. The content transmission device of Claim 11,
wherein the modules are received in packet form, and
with the judgment requirement being that the packets of the module are complete, the detection unit detects a module to be irregular when the packets are incomplete.

13. The content transmission device of Claim 11,
wherein each module includes a module length expressing a data_length of the module,
the judgment requirement is that the module length matches the actual data length of the received module, and
the detection unit, when the data length of the received module fails to match the module length, judges the module to be irregular.

14. The content transmission device of Claim 1,
wherein the broadcast data is in an IP (internet protocol) transport stream format.

15. The content transmission device of Claim 1,
wherein the broadcast data is transmitted in file format from another device.

16. The content transmission device of Claim 1,
wherein the broadcast data is in MPEG-2 transport stream format.

17. A content conversion method used for a content transmission device that receives and converts digital broadcast data containing a multiplexed plurality of contents, and transmits the converted data, the content transmission device including
a storing unit operable to store a plurality of processing models in correspondence with pieces of identity information, each processing model including composition information indicating a composition of the contents,normal-case conversion processing information for when the received broadcast data is normal, and irregular-case conversion processing information for when irregularity has been detected in the received broadcast data, and
the content conversion method comprising steps of:
an acquisition unit acquiring one piece of identity information from an external device that manages a transmission schedule for the broadcast data;
a reception unit receiving the broadcast data;
a selection unit selecting the processing model corresponding to the acquired piece of identity information;
a detection unit detecting a received broadcast data portion whose composition differs from the composition information in the selected processing model;
a conversion unit carrying out, based on a detection result and the selected processing model, normal-case conversion processing on a portion of the received broadcast data whose composition matches the composition information, and irregular-case processing on the portion of the received data whose composition differs from the composition information; and
a transmission unit transmitting the converted data.

18. A content conversion program used for a content transmission device that receives and converts digital broadcast data containing a multiplexed plurality of contents, and transmits the converted data, the content transmission device
including
a storing unit operable to store a plurality of processing models in correspondence with pieces of identity information, each processing model including composition information indicating a composition of the contents, normal-case conversion processing information for when the received broadcast data is normal, and irregular-case conversion processing information for when irregularity has been detected in the received broadcast data, and
the content conversion program comprising program code operable to cause:
an acquisition unit to acquire one piece of identity information from an external device that manages a transmission schedule for the broadcast data;
a reception unit to receive the broadcast data;
a selection unit to select the processing model corresponding to the acquired piece of identity information;
a detection unit to detect a received broadcast data portion whose composition differs from the composition information in the selected processing model;
a conversion unit to carry out, based on a detection result and the selected processing model, normal-case conversion processing on a portion of the received broadcast data whose composition matches the composition information, and irregular-case processing on the portion of the received data whose composition differs from the composition information; and
a transmission unit to transmit the converted data.

19. A computer readable recording medium on which is recorded a content conversion program used for a content transmission device that receives and converts digital broadcast data containing a multiplexed plurality of contents, and transmits the converted data, the content transmission device including
a storing unit operable to store a plurality of processing models in correspondence with pieces of identity information, each processing model including composition information indicating a composition of the contents, normal-case conversion processing information for when the received broadcast data is normal, and irregular-case conversion processing information for when irregularity has been detected in the received broadcast data, and
the content conversion program comprising program code operable to cause:
an acquisition unit to acquire one piece of identity information from an external device that manages a transmission schedule for the broadcast data;
a reception unit to receive the broadcast data;
a selection unit to select the processing model corresponding to the acquired piece of identity information;
a detection unit to detect a received broadcast data portion whose composition differs from the composition information in the selected processing model;
a conversion unit to carry out, based on a detection result and the selected processing model, normal-case conversion processing on a portion of the received broadcast data whose composition matches the composition information, and irregular-case processing on the portion of the received data whose composition differs from the composition information; and
a transmission unit to transmit the converted data.
